# EUROPÄISCHE PATENTANMELDUNG

(11) **EP 0 759 655 A2**
(43) Veröffentlichungstag der Anmeldung: **26.02.1997**
(21) Anmeldenummer: 96112653.9
(22) Anmeldetag: 06.08.1996
(51) Int. Cl.: H02M 7/06

(54) **Verfahren und Vorrichtung zum Reduzieren des Energieverbrauchs bei einem durch einen Spannungswandler versorgten Elektrogerät**

(30) Priorität: 21.08.1995 DE 19530594
(71) Anmelder: Dreuth, Hansjürgen, 35619 Braunfels (DE); Lang, Torsten, 61231 Bad Nauheim (DE)
(72) Erfinder: Dreuth, Hans Jürgen, 35619 Braunfels (DE); Lang, Torsten, 61231 Bad Nauheim (DE)

(57) **Zusammenfassung**

Bei dem Verfahren zur Reduzierung des Energieverbrauchs in durch Spannungswandler versorgten Elektrogeräten wird der Spannungswandler über einen elektronischen oder elektromechanischen Schalter von seiner Stromversorgung getrennt, um während der Zeit der Trennung die Verluste im Spannungswandler zu vermeiden.
"Spannungswandler" bezeichnet hier jedes Gerät, das die Betriebsspannung für das zu versorgende Gerät anpaßt, insbesondere an das Netz angeschlossene Transformatoren und sonstige Netzteile, sowie Versorgungsschaltungen wie z. B. DC-DC-Wandler, die an sonstige elektrische Versorgungen (z.B. Akkumulatoren) angeschlossen sind.
Während der Spannungswandler von seiner Stromversorgung getrennt ist, übernimmt ein Energiespeicher die Versorgung des Verbrauchers. Der Zeitpunkt des Wiedereinschaltens des Spannungswandlers wird vom Ladezustand des Energiespeichers bestimmt bzw. vom aktuellen Energiebedarf des Gerätes.
Da der Gesamtenergieverbrauch zahlreicher Geräte, wie Standby- oder anderer Kleinverbraucher oft maßgeblich von den Verlusten im Spannungswandler bestimmt werden, können durch das Verfahren (bzw. die entsprechende Vorrichtung) der Gesamtenergiebedarf derartiger Geräte und damit Betriebskosten und Umweltbelastungen reduziert werden.

## Beschreibung

**Die Erfindung betrifft** ein Verfahren und eine Vorrichtung zur Reduzierung des Energieverbrauchs bei durch Spannungswandler versorgten Elektrogeräten. Der Begriff "Spannungswandler" bezeichnet hier jede Art von Wandler, der zur Anpassung der Betriebsspannung für das zu versorgende Gerät dient, insbesondere Transformatoren und sonstige Netzteile, die an das Netz angeschlossen sind, sowie sonstige Versorgungsschaltungen wie z. B. DC-DC-Wandler, die an anderen elektrischen Versorgungen als das Netz (z.B. an Akkumulatoren) angesehlossen sind. Elektrische Spannungswandler werden in zahlreichen Geräten zur Versorgung der Gerätehauptfunktion und eventueller Standby-Funktionen verwendet.
Wenn diese Hauptfunktion bzw. eine Standby-Funktion über längere Zeit oder ständig aktiv sein soll, können die Energieverluste des Spannungswandlers einen bedeutenden Anteil am Gesamtverbrauch des Gerätes haben.
Auch bei Geräten, die ständig betrieben werden (Kleinverbraucher), wie z.B. Telekommunikationseinrichtungen oder Meßwertaufnehmer in Haustechnik und Sensorik ist oft der Eigenverbrauch des Spannungswandlers ein wesentlicher Anteil am Gesamtverbrauch.
Durch die große Anzahl durch Spannungswandler versorgter Geräte werden durch die Verluste herkömmlicher Spannungswandler beträchtliche Kosten und Umweltbelastungen verursacht, die durch die hier beschriebenen Verfahren und Vorrichtungen reduziert werden können.

### Stand der Technik

Die Stromversorgung von Elektrogeräten erfolgt meist mit einem einzigen Spannungswandler, der die Versorgung sowohl für den Normalbetrieb des Gerätes als auch für einen eventuellen Standby-Betrieb übernimmt.
Durch den großen Unterschied der Leistungsaufnahme des Gerätes in diesen beiden Betriebsmodi und die Notwendigkeit, die volle für den Normalbetrieb nötige Leistung bereitstellen zu können, überwiegen im Standby-Betrieb die Verluste für den Betrieb des Spannungswandlers die für die Standby-Funktion nötige Leistung oft bei weitem. Auch bei Kleinverbrauchern wird der Energieverbrauch oft im wesentlichen durch den Verbrauch des Spannungswandlers dominiert.
Insbesondere die Verluste in Transformatoren tragen einen wesentlichen Anteil zum Eigenverbrauch von Spannungswandlern bei.

Wenn in Geräten diese Verluste verringert werden sollen, wurden bisher folgende Ansätze verfolgt:
a) Wenn eine Standby-Funktion (oder die Hauptfunktion eines Kleinverbrauchers) nur sehr wenig Leistung benötigt, sie z. B. im Erkennen eines Aktivierungsbefehles über einen Schalter oder über Fernbedienung besteht, ist es möglich,
   i) diese Funktion nicht über den Spannungswandler des Gerätes zu versorgen, sondern diesen primärseitig vom Netz (bzw. sonstigen Stromanschluß) zu trennen, und die Versorgung dieser Funktion über Solarzellen, Batterien oder Akkumulatoren zu bestreiten.
   ii) in die Versorgungsleitung des Gerätes ein Vorschaltgerät zu schalten, das die primärseitige Ein- bzw. Ausschaltung des zu steuernden Gerätes vornimmt (z.B. Gebr.Muster, DE 93 19 049.U1)
b) Bei Geräten, die auch im Standby-Betrieb (oder im Hauptbetrieb bei Kleinverbrauchern) eine Leistungsaufnahme haben, für die eine wie unter 3. a) i) beschriebene Versorgung unzweckmäßig ist, können
   i) Schaltnetzteile eingesetzt werden, deren Schalttransistor im Standby-Betrieb mit Paketen von Impulsen bzw. mit niedrigerer Frequenz als im Normalbetrieb angesteuert werden (z.B. DE-A 4021940).
   ii) getrennte Spannungswandler für Normalbetrieb und Standby-Betrieb verwendet werden.
   iii) hochwertige Netzteilkonstruktionen und -komponenten (z.B. Ringkerntransformatoren) verwendet werden.
Diese Verfahren zur Reduzierung der Verluste haben folgende Nachteile:
- im Fall a): Bei Verwendung von Solarzellen ist der permanente Betrieb (z.B. nachts) nicht ohne zusätzliche Pufferung sichergestellt.
Bei Verwendung von Batterien sind nur sehr geringe Leistungsaufnahmen im Standby-Betrieb (bzw. im Normalbetrieb von Kleinverbrauchern) möglich, wenn für die Batterien akzeptable Standzeiten gefordert werden.
Akkumulatoren können nicht beliebig oft wieder geladen werden, benötigen zusätzlich eine geeignete Ladeschaltung, um eine möglichst hohe Zahl von Ladezyklen zu erreichen und sind oft wegen ihrer Selbstentladung ungünstig für die Pufferung von Standby-Verbrauchern.
Bei der Verwendung von Vorschaltgeräten kommt es unter Umständen zum Verlust von Einstellungen des angeschlossenen Verbrauchers.
- im Fall b): Sowohl die Verwendung von Schaltnetzteilen, die einen sparsameren Standby-Betrieb ermöglichen, als auch die Verwendung zweier Spannungswandler oder hochwertiger Komponenten verursacht höhere Kosten, so daß diese Möglichkeiten bei vielen preiswerten Geräten, die in großer Zahl eingesetzt werden (z.B. Geräte in der Haustechnik wie Klingeltransformatoren, Radiowecker u. a. Kleinverbraucher) wegen der erhöhten Herstellungskosten nicht angewendet werden.

### Aufgabe

Hier setzt die Erfindung an. Zur Reduzierung des Gesamtenergieverbrauchs von Elektrogeräten soll ein Verfahren mit entsprechender Vorrichtung entwickelt werden, das die Energieverluste im Spannungswandler reduziert und somit auch den Gesamtenergieverbrauch des Gerätes herabsetzt.
Dabei sollen auch Gerätefunktionen ermöglicht werden, für die eine Versorgung durch Batterien, Solarzellen ohne Pufferung, oder Akkumulatoren (siehe 3.a)) nicht sinnvoll erscheint.
Besonders bei Geräten mit Standby-Funktionen und elektrischen Kleinverbrauchern, bei denen der Einsatz herkömmlicher Spannungswandler durch die Verluste im Spannungswandler maßgeblich zum Gesamtenergieverbrauch des Gerätes beiträgt, sollen so deutliche Reduzierungen des Gesamtenergieverbrauches und der damit verbundenen Kosten ermöglicht werden.
Durch die Energieeinsparung soll zudem ein Beitrag zur Entlastung der Umwelt ermöglicht werden.

Diese **Aufgabe wird erfindungsgemäß durch** die im Anspruch 1 angegebenen Merkmale gelöst.
Durch die verringerte Anschlußzeit des Spannungswandlers an die Stromversorgung werden dessen Verluste nur während ebendieser Anschlußzeit auftreten und der Gesamtenergieverbrauch wird dadurch vermindert.

**Eine Vorrichtung** zur Durchführung des oben beschriebenen Verfahrens ist in Anspruch 4 angegeben. Ausgestaltungen und Weiterbildungen des Verfahrens bzw. der Vorrichtung sind in den Ansprüchen 2 bis 4 und 6 bis 10 angegeben.

### Weitere Erläuterungen zu dem Verfahren und dazugehörender Vorrichtung

1. Der Spannungswandler kann beliebig ausgeführt sein, z.B. als Transformator.
2. Die Schaltvorrichtung, die den Spannungswandler primärseitig vom Netz bzw. einer anderen elektrischen Versorgung trennt, kann elektromechanisch (z.B. als bistabiles Relais) oder als elektronische Schaltung ausgeführt sein.
3. Der Energiespeicher muß die vom Spannungswandler gelieferte Energie verlustarm (verglichen mit den Verlusten, die beim Dauerbetrieb eines herkömmlichen Spannungswandlers auftreten würden) speichern und abgeben können und kann z.B. als Kondensator (z.B. Elektrolytkondensator oder Doppelschichtkondensator) ausgeführt werden.
4. Die Aufladung des Energiespeichers wird über eine geeignete Ladeschaltung ermöglicht.
5. Während der Spannungswandler vom Netz (bzw. jeweiligen elektrischen Versorgung) getrennt ist, wird die Energieversorgung des Gerätes vom Energiespeicher übernommen, indem dieser durch eine geeignete Schaltung mit dem Verbraucher verbunden ist.
6. Das Anlaufen der Schaltung für das erstmalige Aufladen des Energiespeichers kann entweder durch manuelles Auslösen eines dafür vorgesehenen Schalters sichergestellt werden, oder durch einen geeigneten Schaltungsteil selbst, der primärseitig vom Netz bzw. der jeweiligen elektrischen Versorgung versorgt wird, wie z.B. durch eine geeignete Schaltung für ein bistabiles Relais, das beim Einschalten der Versorgungsspannung in einen definierten Zustand geht. Dabei ist darauf zu achten, daß der Energiebedarf einer solchen Schaltung gering ist, verglichen mit der durch das Trennen des Spannungswandlers von der elektrischen Versorgung eingesparten Energiemenge.
7. Die Kontrolle des Ladezustandes des Energiespeichers kann entweder durch eine geeignete Schaltung der Vorrichtung selbst oder durch den an die Vorrichtung angeschlossenen Verbraucher (z. B. durch einen Microcontroller im Verbraucher, der die Steuerung der Energieversorgung mit kontrolliert) erfolgen.
8. Zur Kontrolle des Ladezustandes des Energiespeichers kann der Ladezustand entweder in der Schaltung gemessen oder ohne Messung geregelt werden. Zur Messung des Ladezustandes können z. B. die den Ladezustand kennzeichnende Größe des Energiespeichers oder die Energiezu- bzw. Abflüsse zum oder vom Energiespeicher gemessen werden.
   Der Energiezufluß zum Energiespeicher während der Ladephase läßt sich z. B. auch auf der Primärseite des Spannungswandlers messen.

### Mögliche Einsatzgebiete und bevorzugte Ausführungsformen:

Die Anwendung der Erfindung empfiehlt sich besonders für Elektrogeräte, die über längere Zeiträume betrieben werden und deren Energieverbrauch durch die Verluste eines konventionellen Spannungswandlers dominiert würden. Hier sind beispielsweise Kleinverbraucher zu nennen: Telekommunikationseinrichtungen, Meldeanlagen, elektrische Regeleinrichtungen, Meßwertaufnehmer, Radiowecker.
Ein weiteres Anwendungsgebiet betrifft Geräte, deren Hauptfunktion nicht permanent benötigt wird, die aber dennoch einen permanenten Standby-Verbrauch aufweisen. Einerseits sind dies Geräte, die im Standby-Modus noch gewisse Kontroll- und Überwachungsfunktionen ausführen müssen z. B. Heizungsanlagen, Videorecorder (Schaltuhrfunktion, Überwachung des VPS-Signals).
Andererseits gibt es eine Vielzahl von Geräten, wie z. B. Geräte der Unterhaltungselektronik, deren Standby-Verbrauch allein durch Eigenschaften bedingt ist, die dem Komfort bei der Benutzung dienen, und bei denen der Einsatz des Verfahrens eine Energieeinsparung ermöglichen würde.
Das hier beschriebene Verfahren läßt sich auch bei Anlagen zur Nutzung regenerativer Energiequellen (z.B. Photovoltaik) zur Energieeinsparung verwenden, wenn bei den dort verwendeten Spannungswandlern unter gewissen Betriebsbedingungen (z.B. im Niedriglastbetrieb) Verluste entstehen. Unter Umständen kann dann bei Reduzierung solcher Verluste eine preisgünstigere Auslegung anderer Komponenten der Anlage erfolgen.
Bei der Realisierung der zur Durchführung des Verfahrens verwendeten Vorrichtung vermeidet man zweckmäßigerweise mechanische Schalter und setzt stattdessen geeignete Halbleiterschaltungen ein. Wichtige Eigenschaften des Energiespeichers sind möglichst hohe Energiedichte, niedrige Selbstentladung sowie niedrige Verluste beim Auf- und Entladen. Diese Forderungen werden z.B. von Doppelschichtkondensatoren erfüllt.
Für die Auslegung der Schaltung ist ein möglichst niedriger Leistungsbedarf erstrebenswert.
Für den Einsatz des Verfahrens in großen Stückzahlen emfiehlt sich die Integration von Halbleiterfunktionen in integrierten Schaltkreisen oder Hybrid-Modulen.

### Ausführungsbeispiel 1

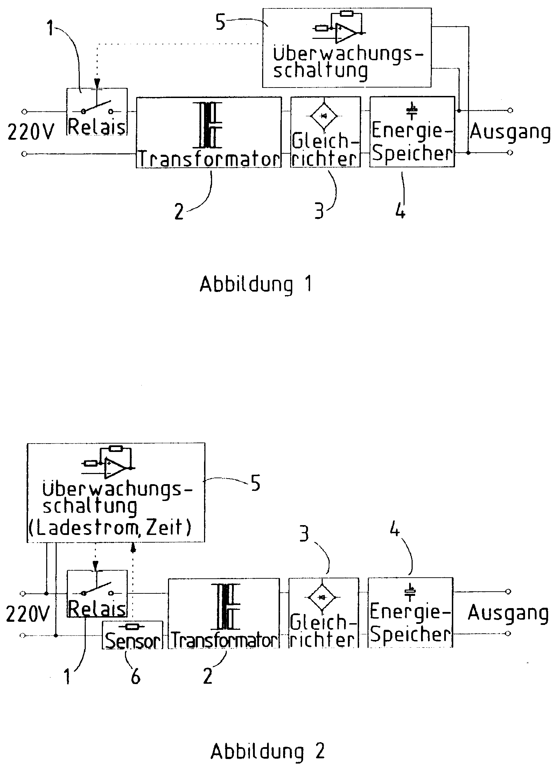

Im folgenden wird ein Ausführungsbeispiel anhand der Abbildung 1 näher erläutert: Für die Stromversorgung eines elektronischen Kleinverbrauchers werden die durch den als Spannungswandler verwendeten Kleintransformator (2) entstehenden Verluste dadurch reduziert, daß dieser nur zum Aufladen des Energiespeichers (4) an das Netz geschaltet wird. Die verbleibenden Verluste des Transformators (2), der Eigenverbrauch der unten beschriebenen Schaltungsteile und die Verluste, die durch die Verwendung des Energiespeichers (4) entstehen, liegen insgesamt deutlich unter den die bei einem permanenten Betrieb des Transformators (2) entstehen wurden.
Der Energiespeicher (4) ist als Doppelschichtkondensator ausgeführt und wird über den Gleichrichter (3) geladen. Der am Ausgang anzuschließende Kleinverbraucher wird direkt aus dem Energiespeicher (4) versorgt. Die Schaltfunktion ist mittels eines bistabilen elektromechanischen oder elektronischen Relais (1) realisiert, das beim Anschluß an das Netz automatisch einschaltet. Dadurch ist die Funktion der Stromversorgung auch nach einem Netzausfall oder nach der bewußten Trennung des Gerätes vom Netz durch den Benutzer gewährleistet.
Die Relaisschaltung (1) weist außerdem eine galvanische Trennung ihrer Ansteuerseite von ihrer Lastseite durch optische Koppelstrecken (Optokoppler) auf.
Die Ansteuerung des Relais (1) erfolgt durch eine Überwachungsschaltung (5), abhängig vom Ladezustand des Energiespeichers (4).
Erreicht die Spannung am Energiespeicher (4) ihren Minimalwert, gibt die Überwachungsschaltung (5) einen Einschaltimpuls an das Relais (1). Beim Erreichen der Maximalspannung am Energiespeicher (4) wird von der Überwachungsschaltung (5) ein Ausschaltimpuls an das Relais (1) gegeben. Minimal- und Maximalspannung werden dabei durch die Anforderungen der Vorrichtung und des Verbrauchers bestimmt. Die Maximalspannung ist außerdem durch die Spannungsfestigkeit des Energiespeichers (4) begrenzt.
Da das Relais (1) bistabil ausgeführt ist, genügen zum Ein- und Ausschalten jeweils kurze Impulse, so daß das Relais (1) im Gegensatz zur Verwendung eines monostabilen Relais nur während des Schaltvorganges einen erhöhten Leistungsbedarf aufweist.

### Ausführungsbeispiel 2

Wenn der Energiebedarf des angeschlossenen Verbrauchers bekannt ist, kann u. U. auf eine vollständige Kontrolle des Ladezustandes des Energiespeichers (wie in Ausführungsbeispiel 1 beschrieben) verzichtet werden. In der Schaltung nach Abb. 2 wurden gegenüber Ausführungsbeispiel 1 folgende Modifikationen vorgenommen: Der Ladevorgang des Energiespeichers (4) wird durch die Überwachungsschaltung (5) in regelmäßigen Zeitabständen eingeleitet. Diese Zeitabstände sind dabei so gewählt, daß eine kontinuierliche Versorgung des angeschlossenen Verbrauchers sichergestellt ist. Das Ende des Ladevorganges wird durch eine indirekte Messung des Ladezustandes des Energiespeichers (4) bestimmt. Dazu wird der pimärseitige Strombedarf des als Spannungswandler eingesetzten Transformators (2) als Indikator für den Ladestrom des Energiespeichers (4) und damit des Ladezustandes desselben herangezogen. Zur Messung des Primärstromes dient ein geeigneter Sensor (6), z. B. ein in Serie zum Transformator geschalteter Widerstand.
Bei Ausführungsbeispiel 2 entfallen damit die in Ausführungsbeispiel 1 notwendigen Optokoppler zur galvanischen Trennung.

### Ausführungsbeispiel 3

Auf eine Messung des primärseitigen Strombedarfs zur Abschätzung des Ladezustandes wie in Ausführungsbeispiel 2 kann u. U. verzichtet werden. Dies kann z. B. dann sinnvoll sein, wenn der Verbraucher keine großen zeitlichen Schwankungen in seinem Leistungsbedarf aufweist.
Dann erfolgt die Aufladung des Energiespeichers ausschließlich zeitgesteuert, d. h. es werden feste Lade- und Entladezeiten verwendet.
In diesem Fall ist dafür zu sorgen, daß eine Überladung des Energiespeichers nicht erfolgen kann. Dieses kann z. B. dadurch sichergestellt werden, daß die Ausgangsspannung des Transformators die Spannungsfestigkeit des Energiespeichers nicht übersteigt, oder durch eine geeignete Schutzschaltung.

### Vorteile

1. Das erfindungsgemäße Verfahren bedingt durch die Reduzierung der effektiven Anschaltzeit des Spannungswandlers, daß die Verluste des Spannungswandlers, da sie nur während seiner Betriebszeit auftreten, nicht den Gesamtverbrauch eines Gerätes dominieren, das überwiegend Standby- oder andere Funktionen ausführt, die das volle Leistungspotential des Spannungswandlers nicht erfordern, oder bei denen der Verlust des Spannungswandlers ähnlich groß oder größer ist als der Energieverbrauch für die Gerätefunktion selbst.
   Dies ist gleichbedeutend mit einer Verbesserung des energetischen Wirkungsgrades des Gerätes.
2. Insbesondere kann bei Geräten, die ständig betrieben werden, wie z.B. Meßwertaufnehmern in Haustechnik und Sensorik, Telekommunikationseinrichtungen oder anderen sog. Standby- und Kleinverbrauchern, der Energieverbrauch gesenkt werden, da er oft maßgeblich durch die Verluste am Spannungswandler (Netzteil) bedingt wird.
3. Das zu versorgende Gerät kann einen Leistungsbedarf aufweisen, für den eine Versorgung durch Batterien, Solarzellen ohne Pufferung, oder Akkumulatoren (siehe 3. a)) nicht sinnvoll erscheint, andererseits aber die Verwendung eines konventionellen Spannungswandlers durch dessen permanente Verluste erheblich verschlechterte energetische Wirkungsgrade zur Folge hätte.
4. Gegenüber herkömmlichen Geräten, die stromnetzseitig eingeschaltet werden, und die daher keine Standby-Verluste aufweisen, die deswegen aber hochwertige Einschalter für die Stromzufuhr benötigen, die meist an der Frontplatte des Gerätes montiert werden, genügen hier einfachere und kostengünstigere Schalter, die auch weniger aufwendig in der Montage sind, zum Auslösen des Einschaltvorganges, ohne jedoch die sonst üblichen Nachteile eines recht hohen Standby-Verbrauchs zu bedingen, wenn der Spannungswandler ständig mit dem Netz verbunden bliebe. Eine Einschaltung des Gerätes mittels Fernbedienung läßt sich so ebenfalls energiesparend verwirklichen.
5. Ein mit diesem Verfahren zu versorgendes Gerät kann konventionell konstruiert sein und die üblichen Funktionen aufweisen. Die Vorrichtung zur Durchführung des Verfahrens kann in das Gerät eingebaut werden.
6. Die Anwendung des Verfahrens erfolgt automatisch durch die entsprechende Vorrichtung, ein verändertes Benutzerverhalten ist nicht erforderlich.
7. Durch die Energieeinsparung kann eine Reduzierung der Betriebskosten und eine Entlastung der Umwelt erreicht werden.

## Patentansprüche

1. **Verfahren zum Reduzieren des Energieverbrauchs bei einem durch einen Spannungswandler versorgten Elektrogerät mit folgenden Merkmalen:**
a) während des Betriebes des Gerätes wird der Spannungswandler primärseitig nur kurze Zeiträume mit dem Netz bzw. einer anderen elektrischen Versorgung verbunden
b) der Spannungswandler ermöglicht in diesen Zeiträumen neben der Versorgung einer eventuell benötigten Gerätefunktion auch die Aufladung eines geeigneten Energiespeichers
c) in den Zeiträumen, in denen der Spannungswandler von der Stromversorgung abgetrennt ist, wird die Funktion (eine Standby-Funktion oder Hauptfunktion) des Gerätes durch die Energieentnahme aus dem Energiespeicher sichergestellt
d) der Spannungswandler wird automatisch ans Netz (oder die jeweilige Stromversorgung) geschaltet, sobald der Energievorrat im Energiespeicher zur Neige geht, um diesen aufzuladen, oder wenn die Gerätefunktion es sonst erfordert.

2. Verfahren nach Anspruch 1, **dadurch gekennzeichnet, daß** das Gerät je nach momentanem Bedarf automatisch zwischen Energiespeicher und direktem Anschluß an den Spannungswandler hin- und hergeschaltet wird.

3. Verfahren nach Anspruch 1 oder 2, **dadurch gekennzeichnet, daß** nach dem Anschluß des Gerätes an die Stromversorgung das erstmalige Einschalten des Spannungswandlers und damit auch das erstmalige Aufladen des Energiespeichers über einen geeigneten Schaltungsteil, der primärseitig von der Stromversorgung (z.B. Lichtnetz) versorgt wird, oder einem Startschalter, erfolgt.

4. **Vorrichtung** zur Durchführung des Verfahrens nach einem der Ansprüche 1 bis 3,
**gekennzeichnet durch**
einen Spannungswandler (2,3), der über eine Schaltvorrichtung (1) vom Netz (bzw. der jeweiligen Stromversorgung) getrennt werden kann, der während seines Betriebes neben der Versorgung des Verbrauchers die Aufladung eines Energiespeichers (4) ermöglicht, welcher während der Zeit, in der der Spannungswandler (2,3) vom Netz (bzw. der jeweiligen Stromversorgung) getrennt ist, die Energieversorgung des Gerätes übernimmt, und dessen Ladezustand die Zeitpunkte des automatischen Aus- und Wiedereinschaltens des Spannungswandlers (2,3) bestimmt, sofern nicht eine Funktion des Gerätes ein Einschalten des Spannungswandlers (2,3) notwendig macht und auslöst.

5. Vorrichtung nach Anspruch 4, **dadurch gekennzeichnet, daß** die Schaltvorrichtung (1) als elektromechanischer oder elektronischer Schalter ausgebildet ist, zu dem parallel ein Startschalter angeordnet ist, um ein erstmaliges Aufladen des Energiespeichers (4) zu veranlassen, sobald das Gerät an die Stromversorgung angeschlossen wird.

6. Vorrichtung nach Anspruch 4 oder 5, **dadurch gekennzeichnet, daß** das Gerät direkt am Energiespeicher angeschlossen ist.

7. Vorrichtung nach einem der Ansprüche 4 bis 6, **dadurch gekennzeichnet, daß** der Energiespeicher als Doppelschichtkondensator ausgeführt ist.

8. Vorrichtung nach einem der Ansprüche 4 bis 7, **dadurch gekennzeichnet, daß** der elektromechanische oder elektronische Schalter mit einer galvanischen Trennung zwischen seiner Ansteuerung und dem von ihm geschaltetem Stromkreis versehen ist.

9. Vorrichtung nach Anspruch 8, **dadurch gekennzeichnet, daß** die galvanische Trennung aus optischen Koppelstrecken (z. B. Optokoppler) besteht.

10. Vorrichtung nach Anspruch 8, dadurch gekennzeichnet, daß die galvanische Trennung mit induktiven Koppelstrecken (bei Verwendung eines Transformators als Spannungswandler z. B. über diesen selbst) realisiert wird.
